# EUROPEAN PATENT SPECIFICATION

(11) **EP 3 382 859 B1**
(45) Date of publication and mention of the grant of the patent: **03.06.2020**
(21) Application number: 17163367.0
(22) Date of filing: 28.03.2017
(51) Int. Cl.: H02K 7/06, H02K 7/18, B60G 13/14, F03G 7/08, F03B 13/00

(54) **ELECTRICAL POWER DELIVERY APPARATUS AND METHOD**
ELEKTRISCHE STROMVERSORGUNGSVORRICHTUNG UND VERFAHREN
APPAREIL ET PROCÉDÉ DE DISTRIBUTION D'ÉNERGIE ÉLECTRIQUE

(43) Date of publication of application: 03.10.2018
(73) Proprietor: Vestel Elektronik Sanayi ve Ticaret A.S., 45030 Manisa (TR)
(72) Inventor: YALIN, Nevzat, 45030 Manisa (TR); ÖZEN, Erol, 45030 Manisa (TR); ÖZKÜÇÜK, Serhat, 45030 Manisa (TR)
(74) Representative: Flint, Adam

(56) References cited:
- WO-A1-2017/015004
- CN-Y- 2 486 370
- JP-A- 2001 253 650
- JP-B2- 3 782 187
- US-A- 4 282 475
- US-A1- 2011 266 801

## Description

### Technical Field

The present disclosure relates to electrical power delivery apparatus for delivering electrical power and to a method of delivering electrical power.

### Background

Known electrical power delivery apparatus for delivering electrical power can often be inefficient, with power often being wasted. Moreover, some electrical power delivery apparatus have requirements for components that are expensive.

JP2001253650A discloses a controller for an elevator in which alternating current is converted into direct current by a converter, and further converted into direct current of variable voltage by a DC chopper circuit formed by connecting a switching element and a diode inversely in parallel with each other.

JP3782187B2 discloses a testing device and method. A primary side breaker 2 of a field transformer 1 is thrown to receive an external power supply and is supplied to a thyristor AC/DC converter 3. Then, a current is fed to a field coil winding 5 by closing a field breaker 4. When a current flows to the field coil winding 5, a voltage is induced at an armature coil winding 6 of the generator and a voltage is generated at an armature terminal.

CN2486370Y discloses a shock absorber in the form of an electromagnetic damper that absorbs "vibrating" energy.

WO2017015004A1 discloses energy harvesting devices which can be deployed in a wellbore to transform external energy in the wellbore to electric power for consumption by electric devices disposed in the wellbore.

US4282475A discloses a motor vehicle battery charger which is mounted on and carried with the motor vehicle. A tension releasable power source connector automatically disconnects the charger from the stationary source of alternating current power when the vehicle is driven off. A first relay is used to prevent discharge of the battery when the charger is disconnected from the power source and to prevent current flow from one battery to another where a dual battery system is used. A second relay is used to disconnect the charger when the vehicle electrical system is connected to the batteries.

### Summary

According to a first aspect disclosed herein, there is provided an electrical power delivery apparatus for delivering electrical power, the apparatus comprising:
an AC-to-DC power converter for converting input AC power to output DC power for providing a DC output;
a transformer having an input for connection to an AC power supply and an output connected to an input of the AC-to-DC power converter, the transformer being constructed and arranged to change the voltage of the input AC power supply and pass the changed voltage AC power as an input AC power to the AC-to-DC power converter;
a generator for converting mechanical energy to electrical energy, the generator having a rotor which in use is positioned in a magnetic field generated in use by the DC output of the AC-to-DC power converter (4) passing through a cable (6) to an apparatus or device which is receiving the electrical power; and
a transducer for converting vibrational energy to rotational energy;
the arrangement being such that in use the transducer converts vibrational energy produced by the transformer to rotational energy of the rotor of the generator so as to cause the rotor of the generator to rotate in the magnetic field generated by the DC output, thereby to cause the generator to generate electrical power.

The transformer may be for example a step-up transformer, for increasing the voltage of the input AC power supply and passing the increased voltage AC power as an input AC power to the AC-to-DC power converter.

In an example, the apparatus comprises a controller for controlling operation of the apparatus, the generator being in electrical communication with the controller to feed electrical power generated by the generator to the controller.

In an example, the generator is arranged to generate AC electrical power.

In an example, the transducer is a mechanical transducer. That is, the transducer is a transducer that directly mechanically converts vibration to rotation (rather than using some intermediate electric transducer, such as a piezoelectric device or the like).

In an example, the transducer comprises a housing containing a liquid, a paddle located in the liquid, and a rotor located in the liquid, the arrangement being such that the paddle is arranged to receive vibrational energy produced by the transformer in use to cause the paddle to move back and forth in the liquid thereby to cause the liquid to rotate in the housing, rotation of the liquid causing the rotor of the transducer to rotate, and rotation of the rotor of the transducer causing the rotor of the generator to rotate.

There may also be provided a charger for charging a battery, the charger comprising apparatus as described above. The battery may be for example a vehicle battery, including for example a vehicle battery in an electric or hybrid car.

According to a second aspect disclosed herein, there is provided a method of delivering electrical power, the method comprising:
using a transformer, transforming an input AC power supply from an input AC power at a first voltage to an output AC at a second voltage;
using an AC-to-DC power converter, converting the output AC at the second voltage to DC to provide a DC output;
using a transducer, converting vibrational energy produced by the transformer to rotational energy of a rotor of a generator located in a magnetic field generated by the DC output of the AC-to-DC power converter passing through a cable to an apparatus or device which is receiving the electrical power so as to cause the rotor of the generator to rotate in the magnetic field generated by the DC output, thereby to cause the generator to generate electrical power.

In an example, the method comprises the generator feeding electrical power generated by the generator to a controller of the apparatus.

In an example, the generator generates AC electrical power.

In an example, the converting vibrational energy to rotational energy is carried out by a mechanical transducer.

### Brief Description of the Drawings

To assist understanding of the present disclosure and to show how embodiments may be put into effect, reference is made by way of example to the accompanying drawings in which:
Figure 1 shows schematically an example of apparatus according to the present disclosure;
Figure 2 shows schematically an example of a generator; and
Figure 3 shows schematically an example of a mechanical transducer.

### Detailed Description

Electric current delivery apparatus, including for example vehicle charging or similar apparatus for charging vehicle batteries, typically includes a control block for controlling the apparatus as a whole, delivering and receiving instructions, etc. The apparatus typically includes a switched mode power supply (SMPS) for delivering electrical power to the control block. The SMPS block must normally be isolated because the user can for example touch a control pad or touch a screen that controls the control block . Such SMPS blocks are expensive because of the need for this electrical insulation. Moreover, the SMPS block typically requires its own PCB (printed circuit board) and components such as its own transformer, capacitors, filters, etc., as its power source may be for example a high voltage power source and yet the SMPS is intended only to deliver power at a low voltage.

Moreover, known electric current delivery apparatus typically has its own main high power transformer for changing the incoming AC voltage to an AC voltage which is input to a main power converter of the apparatus, which converts the AC to DC for delivery to a device. However, mechanical vibration in the main high power transformer is typically caused during operation, which represents a power loss, i.e. wasted energy.

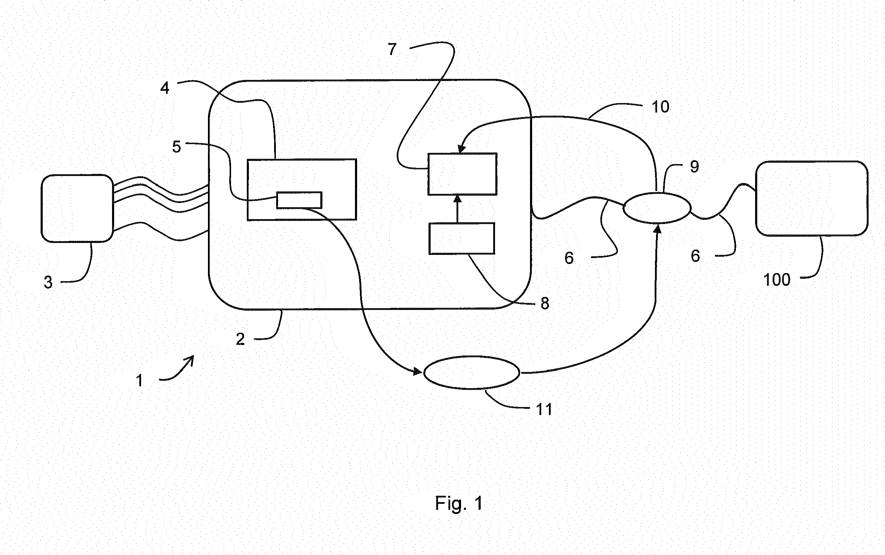

Figure 1 shows schematically an example of electrical power delivery apparatus 1 for delivering electrical power according to the present disclosure. In this example, the apparatus 1 is a vehicle battery charging apparatus, for delivering electrical power to a vehicle battery 100. The vehicle may be for example an electric car or vehicle or a hybrid car or vehicle. In other examples, the apparatus 1 is a battery charger for charging batteries of different types of apparatus or devices. In yet other examples, the apparatus 1 is for delivering electrical power to other electrical or electronic devices.

The apparatus 1 has a charger board 2 which is electrically connected to a power supply 3. The power supply 3 may provide AC (alternating current) power, which may be for example 3-phase or 1-phase AC power, to the charger board 2. The power supply 3 may be for example a mains power supply.

The apparatus 1 further includes a power converter 4 for converting the incoming power from the power supply 3. In this example, the power converter 4 converts incoming AC power to outgoing DC (direct current) power. In other examples, the power converter 4 may convert incoming AC power to outgoing AC power (for example, at a different frequency and/or a different voltage).

A transformer 5 is associated with the power converter 4. The transformer 5 operates to change the voltage of the incoming AC power from the main power supply 3 to a different voltage output AC power which is then converted by the power converter 4. As a particular example in the case of a vehicle battery charger, the power supply 3 may be mains power, which is at a (nominal) voltage of 230V. In this case, the transformer 5 may be a step-up transformer 5 which increases the incoming mains voltage to a much higher value, for example in the region of 600V or more.

The DC which is output by the power converter 4 is passed by a DC power cable 6 to the apparatus or device to be powered or charged, which in this example is a vehicle battery 100 of an electric or hybrid vehicle.

The apparatus 1 also includes a control block 7, which provides for overall control of the apparatus 1. The control block 7 may have its own power supply 8.

Also indicated in Figure 1 is a transducer 9 for converting vibrational energy to rotational energy. This will be discussed further below.

In use, incoming AC power from the main power supply 3 is passed to the transformer 5 of the power converter 4. The transformer 5 changes the voltage of the incoming AC power from the main power supply 3. As mentioned, in the example of the apparatus 2 being a charger for vehicle batteries, particularly if the vehicle is an electric or hybrid vehicle, the transformer 5 will normally step-up the incoming voltage. The power converter 4 converts its input AC power (i.e. the AC power that has had its voltage changed by the transformer 4) to output DC power. The output DC power passes along the power cable 6 to the battery 100 to be charged (or other device that is being powered or charged by the apparatus 1).

As is known, the DC current flowing through the power cable 6 generates a magnetic field around the power cable 6. In accordance with the present disclosure, a generator 9 for converting mechanical energy to electrical energy is positioned in the vicinity of the power cable 6 and therefore in the magnetic field that is generated by current flowing through the power cable 6 in use. In particular, the generator 9 has a rotor which is driven to rotate in the magnetic field around the power cable 6.

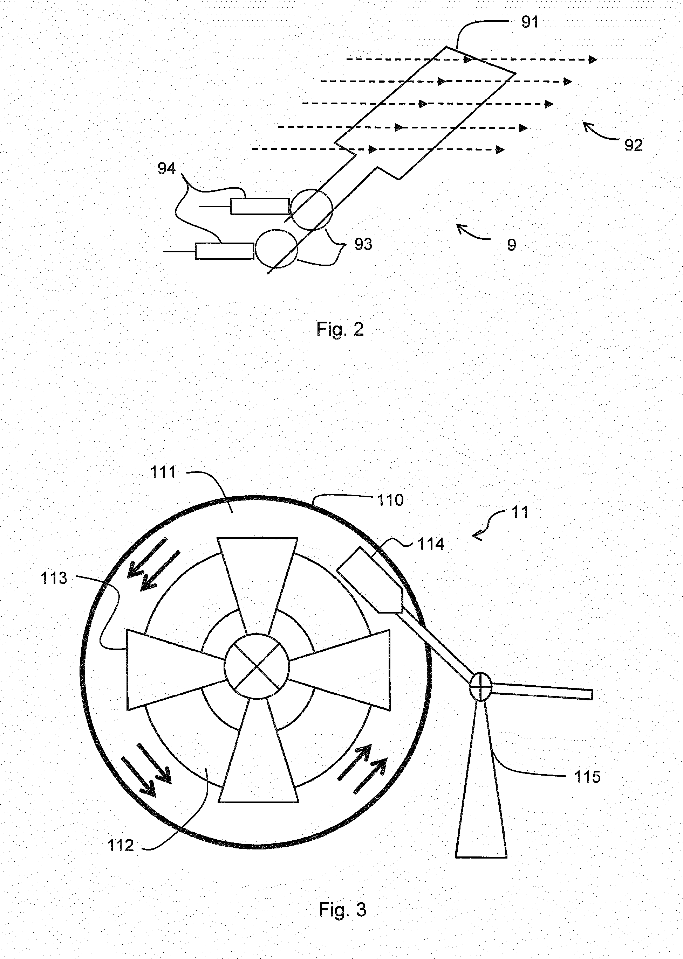

As is known per se, rotation of an electrically conductive rotor in a magnetic field generates an electric current in the rotor. This is shown schematically in Figure 2, which shows schematically an example of a generator 9. The generator 9 has a rotor 91 on which is wound an armature and which is arranged so that its axis of rotation is (at least partially) transverse to the magnetic field 92. The rotor 91 is supported by slip rings 93. Respective electric brushes 94 are in electrical contact with the slip rings 93. This arrangement generates an alternating current through the brushes 94 as the rotor 91 rotates in the magnetic field 92.

As indicated systematically by the arrowed line 10 in Figure 1, the AC power generated by the generator 9 can be passed to the control block 7 to power the control block 7 or at least to contribute to the power supply needs of the control block 7. This means that the power supply 8 for the control block 7 can be simpler than in the case of the prior art. Indeed, the power supply 8 for the control block 7 may be a SMPS block, but one that is much simpler than in prior art vehicle battery charging apparatus as discussed above. For example, the power supply 8 for the control block 7 itself may be arranged to receive the power generated by the generator 9, which avoids the power supply 8 for the control block 7 having to receive and use mains power from a mains power supply 3. This in turn can avoid the need to isolate the power supply 8 for the control block 7 from other components as it does not carry a high voltage. It also means that the power supply 8 for the control block 7 can avoid having to use components such as its own transformer, capacitors, filters, etc., merely to step down an incoming mains power AC voltage.

As is known, transformers will often vibrate during, because of the interacting magnetic fields on the opposite sides of the transformer. This can often be heard as an audible hum or buzz from an operating transformer.

In the present example, the apparatus 1 also includes a transducer 11 for converting the vibrational energy of the operating transformer 5 to rotational energy, which is used to drive the rotor 91 of the generator 9. That is, the transducer 11 is connected so as to receive vibrational energy from the operating transformer 5, convert that vibrational energy to rotational energy of the rotor 91 of the generator 9. This causes the rotor 91 of the generator 9 to rotate in the magnetic field 92 generated around the power cable 6 in use, which causes the generator 9 to generate AC power. As mentioned, that generated AC power is passed 10 to the control block 7 to power the control block 7 of the apparatus 1, or at least to contribute to the power supply needs of the control block 7 of the apparatus 1.

Accordingly, this example apparatus 1 provides a simple power source for the control block 7 of the apparatus 1, avoiding the need for complex and expensive power supplies such as the complex SMPS used in the prior art. This example apparatus 1 recovers energy that would otherwise be lost or wasted in order to provide the ultimate power source for this, in particular by use of the transducer 11 to convert vibrational energy arising in the main transformer 5 to rotational energy of the rotor 92 of the generator 9 to generate AC power for the control block 7 of the apparatus 1. The vibrational energy arising in the main transformer 5 is directly proportional to the current in the transformer 5.

To give an idea of the relative electrical powers, a typical control block 7 in a vehicle charging apparatus only requires low power, of for example 10W to 12W or so. On the other hand, a vehicle charging apparatus may generate up to around 44kW of electrical power, which therefore causes a current of around 70A to pass through the power cable 6 to the vehicle battery 100.

The transducer 11 may be one of a number of different types. In some examples, the transducer 11 is mechanical, that is, the transducer 11 directly mechanically converts vibration to rotation (rather than using some intermediate electric transducer, such as a piezoelectric device or the like).

Figure 3 shows schematically a cross-sectional view of an example of a mechanical transducer 11. The transducer 11 has a generally hollow housing 110. In this example, the housing 110 has a circular cross-sectional shape and may be in the form of an elongate cylinder. The housing 110 contains a liquid 111. A rotor 112 having a number of rotor blades 113 is mounted for rotation centrally of the housing 110. A paddle 114 is mounted in the liquid 111 by a force-transfer mechanism 115, which has a number of linked lever arms.

The force-transfer mechanism 115 is arranged to receive vibrational energy from the transformer 5 in use. As the transformer 5 operates and vibrates, this vibrational energy is received by the force-transfer mechanism 115 and, by the arrangement of the lever arms, causes the paddle 114 to move back and forth in the liquid 111. This in turn causes the liquid 111 to rotate within the housing 110. In turn, the rotation of the liquid 111 forces the rotor blades 113 to rotate the rotor 112. Finally, the rotation of the rotor 112 of the transducer 11 is used to drive the rotor of the generator 9 as discussed above. The use of a rotating liquid 111 has advantages in that the inertia of the liquid means that there is in general continuity in the rotation of the liquid 111.

The liquid 111 may be for example an oil, such as a mineral oil. The liquid 111 in an example has a specific density less than 1, which enables the paddle 114 to cause the liquid 111 to rotate more easily. The paddle 114 may be made of a flexible material that is also lightweight and strong. Suitable materials include plastics or composite materials.

It will be understood that the processor or processing system or circuitry referred to herein may in practice be provided by a single chip or integrated circuit or plural chips or integrated circuits, optionally provided as a chipset, an application-specific integrated circuit (ASIC), field-programmable gate array (FPGA), digital signal processor (DSP), graphics processing units (GPUs), etc. The chip or chips may comprise circuitry (as well as possibly firmware) for embodying at least one or more of a data processor or processors and a digital signal processor or processors, which are configurable so as to operate in accordance with the exemplary embodiments. In this regard, the exemplary embodiments may be implemented at least in part by computer software stored in (non-transitory) memory and executable by the processor, or by hardware, or by a combination of tangibly stored software and hardware (and tangibly stored firmware).

Reference is made herein to data storage for storing data. This may be provided by a single device or by plural devices. Suitable devices include for example a hard disk and non-volatile semiconductor memory.

The examples described herein are to be understood as illustrative examples of embodiments of the invention. Further embodiments and examples are envisaged. Any feature described in relation to any one example or embodiment may be used alone or in combination with other features. In addition, any feature described in relation to any one example or embodiment may also be used in combination with one or more features of any other of the examples or embodiments, or any combination of any other of the examples or embodiments. Furthermore, equivalents and modifications not described herein may also be employed within the scope of the invention, which is defined in the claims.

## Claims

1. An electrical power delivery apparatus (1) for delivering electrical power, the apparatus (1) comprising:
an AC-to-DC power converter (4) for converting input AC power to output DC power for providing a DC output;
a transformer (5) having an input for connection to an AC power supply (3) and an output connected to an input of the AC-to-DC power converter (4), the transformer (5) being constructed and arranged to change the voltage of the input AC power supply (3) and pass the changed voltage AC power as an input AC power to the AC-to-DC power converter (4);
a generator (9) for converting mechanical energy to electrical energy, the generator (9) having a rotor (91) which in use is positioned in a magnetic field generated in use by the DC output of the AC-to-DC power converter (4) passing through a cable (6) to an apparatus or device which is receiving the electrical power; and
a transducer (11) for converting vibrational energy to rotational energy;
the arrangement being such that in use the transducer (11) converts vibrational energy produced by the transformer (5) to rotational energy of the rotor (91) of the generator (9) so as to cause the rotor (91) of the generator (9) to rotate in the magnetic field generated by the DC output, thereby to cause the generator (9) to generate electrical power.

2. Apparatus (1) according to claim 1, comprising a controller (7) for controlling operation of the apparatus (1), the generator (9) being in electrical communication with the controller (7) to feed electrical power generated by the generator (9) to the controller (7).

3. Apparatus (1) according to claim 1 or claim 2, wherein the generator (9) is arranged to generate AC electrical power.

4. Apparatus (1) according to any of claims 1 to 3, wherein the transducer (11) is a mechanical transducer (11).

5. Apparatus (1) according to claim 4, the transducer (11) comprising a housing (110) containing a liquid (111), a paddle (114) located in the liquid (111), and a rotor (91) located in the liquid (111), the arrangement being such that the paddle (114) is arranged to receive vibrational energy produced by the transformer (5) in use to cause the paddle (114) to move back and forth in the liquid (111) thereby to cause the liquid (111) to rotate in the housing (110), rotation of the liquid (111) causing the rotor (91) of the transducer (11) to rotate, and rotation of the rotor (91) of the transducer (11) causing the rotor (91) of the generator (9) to rotate.

6. A charger for charging a battery, the charger comprising apparatus (1) according to any of claims 1 to 5.

7. A method of delivering electrical power, the method comprising:
using a transformer (5), transforming an input AC power supply (3) from an input AC power at a first voltage to an output AC at a second voltage;
using an AC-to-DC power converter (4), converting the output AC at the second voltage to DC to provide a DC output;
using a transducer (11), converting vibrational energy produced by the transformer (5) to rotational energy of a rotor (91) of a generator (9) located in a magnetic field generated by the DC output of the AC-to-DC power converter (4) passing through a cable (6) to an apparatus or device which is receiving the electrical power so as to cause the rotor (91) of the generator (9) to rotate in the magnetic field generated by the DC output, thereby to cause the generator (9) to generate electrical power.

8. A method according to claim 7, comprising the generator (9) feeding electrical power generated by the generator (9) to a controller (7) of the apparatus (1).

9. A method according to claim 7 or claim 8, wherein the generator (9) generates AC electrical power.

10. A method according to any of claims 7 to 9, wherein the converting vibrational energy to rotational energy is carried out by a mechanical transducer (11).

## Patentansprüche

1. Elektrische Leistungsabgabevorrichtung (1) zur Abgabe von elektrischer Leistung, wobei die Vorrichtung (1) umfasst:
einen Wechselstrom-Gleichstrom-Leistungswandler (4) zum Wandeln von Eingangswechselstromleistung in Ausgangsgleichstromleistung zum Bereitstellen eines Gleichstromausgangs;
einen Transformator (5) mit einem Eingang zum Anschluss an eine Wechselstromleistungsversorgung (3) und einem Ausgang, der an einen Eingang des Wechselstrom-Gleichstrom-Leistungswandlers (4) angeschlossen ist, wobei der Transformator (5) dazu konstruiert und eingerichtet ist, die Spannung der Eingangswechselstromleistungsversorgung (3) zu ändern und die Wechselstromleistung mit geänderter Spannung als eine Eingangswechselstromleistung an den Wechselstrom-Gleichstrom-Leistungswandler (4) zu leiten;
einen Generator (9) zum Wandeln von mechanischer Energie in elektrische Energie, wobei der Generator (9) einen Rotor (91) aufweist, der im Gebrauch in einem Magnetfeld positioniert ist, das im Gebrauch von dem Gleichstromausgang des Wechselstrom-Gleichstrom-Leistungswandlers (4) erzeugt wird, der durch ein Kabel (6) zu einer Vorrichtung oder einem Gerät geleitet wird, die bzw. das die elektrische Leistung empfängt; und
einen Umwandler (11) zum Wandeln von Schwingungsenergie in Rotationsenergie;
wobei die Anordnung derart ist, dass im Gebrauch der Umwandler (11) Schwingungsenergie, die von dem Transformator (5) produziert wird, in Rotationsenergie des Rotors (91) des Generators (9) wandelt, um zu bewirken, dass sich der Rotor (91) des Generators (9) in dem Magnetfeld, das von dem Gleichstromausgang erzeugt wird, dreht, wodurch bewirkt wird, dass der Generator (9) elektrische Leistung erzeugt.

2. Vorrichtung (1) nach Anspruch 1, umfassend eine Steuereinheit (7) zum Steuern des Betriebs der Vorrichtung (1), wobei der Generator (9) in elektrischer Kommunikation mit der Steuereinheit (7) steht, um elektrische Leistung, die von dem Generator (9) erzeugt wird, der Steuereinheit (7) zuzuführen.

3. Vorrichtung (1) nach Anspruch 1 oder 2, wobei der Generator (9) dazu eingerichtet ist, eine elektrische Wechselstromenergie zu erzeugen.

4. Vorrichtung (1) nach einem der Ansprüche 1 bis 3, wobei der Umwandler (11) ein mechanischer Umwandler (11) ist.

5. Vorrichtung (1) nach Anspruch 4, wobei der Umwandler (11) ein Gehäuse (110), das eine Flüssigkeit (111) enthält, ein Paddel (114), das in der Flüssigkeit (111) angeordnet ist, und einen Rotor (91), der in der Flüssigkeit (111) angeordnet ist, umfasst, wobei die Anordnung derart ist, dass das Paddel (114) dazu eingerichtet ist, Schwingungsenergie, die von dem Transformator (5) im Gebrauch produziert wird, zu empfangen, um zu bewirken, dass sich das Paddel (114) in der Flüssigkeit (111) vor- und zurückbewegt, wodurch bewirkt wird, dass sich die Flüssigkeit (111) in dem Gehäuse (110) dreht, wobei eine Drehung der Flüssigkeit (111) bewirkt, dass sich der Rotor (91) des Umwandlers (11) dreht, und eine Drehung des Rotors (91) des Umwandlers (11) bewirkt, dass sich der Rotor (91) des Generators (9) dreht.

6. Ladegerät zum Laden einer Batterie, wobei das Ladegerät eine Vorrichtung (1) nach einem der Ansprüche 1 bis 5 umfasst.

7. Verfahren zur Abgabe von elektrischer Leistung, wobei das Verfahren umfasst:
Verwenden eines Transformators (5), der eine Eingangswechselstromleistungsversorgung (3) von einer Eingangswechselstromleistung mit einer ersten Spannung in einen Ausgangswechselstrom mit einer zweiten Spannung umwandelt;
Verwenden eines Wechselstrom-Gleichstrom-Leistungswandlers (4), der den Ausgangswechselstrom mit der zweiten Spannung in Gleichstrom wandelt, um einen Gleichstromausgang bereitzustellen;
Verwenden eines Umwandlers (11), der Schwingungsenergie, die von dem Transformator (5) produziert wird, in Rotationsenergie eines Rotors (91) eines Generators (9) wandelt, der in einem Magnetfeld angeordnet ist, das von dem Gleichstromausgang des Wechselstrom-Gleichstrom-Leistungswandlers (4) erzeugt wird, der durch ein Kabel (6) zu einer Vorrichtung oder einem Gerät geleitet wird, die bzw. das die elektrische Leistung empfängt, um zu bewirken, dass sich der Rotor (91) des Generators (9) in dem Magnetfeld, das von dem Gleichstromausgang erzeugt wird, dreht, wodurch bewirkt wird, dass der Generator (9) elektrische Leistung erzeugt.

8. Verfahren nach Anspruch 7, umfassend den Generator (9), der elektrische Leistung, die von dem Generator (9) erzeugt wird, einer Steuereinheit (7) der Vorrichtung (1) zuführt.

9. Verfahren nach Anspruch 7 oder 8, wobei der Generator (9) elektrische Wechselstromleistung erzeugt.

10. Verfahren nach einem der Ansprüche 7 bis 9, wobei das Wandeln von Schwingungsenergie in Rotationsenergie von einem mechanischen Umwandler (11) durchgeführt wird.

## Revendications

1. Appareil de distribution d'énergie électrique (1) pour distribuer de l'énergie électrique, l'appareil (1) comprenant :
un convertisseur de puissance CA/CC (4) pour convertir une puissance d'entrée CA en puissance de sortie CC pour obtenir une sortie CC ;
un transformateur (5) comportant une entrée destinée à être connectée à une alimentation en puissance CA (3) et une sortie connectée à une entrée du convertisseur de puissance CA/CC (4), le transformateur (5) étant construit et agencé pour changer la tension de l'alimentation en puissance d'entré CA (3) et faire passer la puissance en tension CA changée en tant que puissance d'entrée CA au convertisseur de puissance CA/CC (4) ;
un générateur (9) pour convertir de l'énergie mécanique en énergie électrique, le générateur (9) comportant un rotor (91) qui, lorsqu'utilisé, est situé dans un champ magnétique généré lors de l'utilisation par la sortie CC du convertisseur de puissance CA/CC (4) qui passe par un câble (6) jusqu'à un appareil ou un dispositif qui reçoit l'énergie électrique ; et
un transducteur (11) pour convertir de l'énergie vibratoire en énergie rotationnelle ;
l'agencement étant tel que lorsqu'en utilisation le transducteur (11) convertit de l'énergie vibratoire produite par le transformateur (5) en énergie rotationnelle du rotor (91) du générateur (9) de sorte à induire le rotor (91) du générateur (9) à tourner dans le champ magnétique généré par la sortie CC, induisant par là le générateur (9) à générer de l'énergie électrique.

2. Appareil (1) selon la revendication 1, comprenant un contrôleur (7) pour contrôler le fonctionnement de l'appareil (1), le générateur (9) étant en communication électrique avec le contrôleur (7) pour alimenter l'énergie électrique généré par le générateur (9) au contrôleur (7).

3. Appareil (1) selon, soit la revendication 1, soit la revendication 2, dans lequel le générateur (9) est agencé pur générer de l'énergie électrique CA.

4. Appareil (1) selon l'une quelconque des revendications 1 à 3, dans lequel le transducteur (11) est un transducteur mécanique (11).

5. Appareil (1) selon la revendication 4, le transducteur (11) comprenant un logement (110) contenant un liquide (111), une palette (114) située dans le liquide (111), et un rotor (91) situé dans le liquide (111), l'agencement étant tel que la palette (114) est agencée pour recevoir de l'énergie vibratoire produite par le transformateur (5) lorsqu'en utilisation pour induire la palette (114) à aller et venir dans le liquide (111) pour induire par là le liquide (111) à tourner dans le logement (110), la rotation du liquide (111) induisant le rotor (91) du transducteur (11) à tourner, et la rotation du rotor (91) du transducteur (11) induisant le rotor (91) du générateur (9) à tourner.

6. Chargeur pour charger une batterie, le chargeur comprenant l'appareil (1) selon l'une quelconque des revendications 1 à 5.

7. Procédé de distribution d'énergie électrique, le procédé consistant à :
en utilisant un transformateur (5), transformer une alimentation en puissance d'entrée CA (3) d'une puissance d'entrée CA sous une première tension en une sortie CA sous une deuxième tension ;
en utilisant un convertisseur de puissance CA/CC (4), convertir la sortie CA sous la deuxième tension en CC pour obtenir une sortie CC ;
en utilisant un transducteur (11), convertir de l'énergie vibratoire produite par le transformateur (5) en énergie rotationnelle d'un rotor (91) d'un générateur (9) situé dans un champ magnétique généré par la sortie CC du convertisseur de puissance CA/CC (4) qui passe par un câble (6) jusqu'à un appareil ou un dispositif qui reçoit l'énergie électrique de sorte à induire le rotor (91) du générateur (9) à tourner dans le champ magnétique généré par la sortie CC, induisant par là le générateur (9) à générer de l'énergie électrique.

8. Procédé selon la revendication 7, comprenant le générateur (9) qui alimente l'énergie électrique générée par le générateur (9) à un contrôleur (7) de l'appareil (1).

9. Procédé selon, soit la recommandation 7, soit la recommandation 8, dans lequel le générateur (9) génère de l'énergie électrique CA.

10. Procédé selon l'une quelconque des revendications 7 à 9, dans lequel la conversion de l'énergie vibratoire en énergie rotationnelle est effectuée par un transducteur mécanique (11).
